# EUROPÄISCHE PATENTSCHRIFT

(11) **EP 1 977 492 B1**
(45) Veröffentlichungstag und Bekanntmachung des Hinweises auf die Patenterteilung: **31.08.2016**
(21) Anmeldenummer: 06849340.2
(22) Anmeldetag: 27.12.2006
(51) Int. Cl.: H02H 3/16, H02H 7/04

(54) **SCHUTZEINRICHTUNG MIT EINEM LEISTUNGSSCHALTER, INSBESONDERE EINEM NIEDERSPANNUNGS-LEISTUNGSSCHALTER**
PROTECTIVE DEVICE HAVING A CIRCUIT BREAKER, IN PARTICULAR A LOW-VOLTAGE CIRCUIT BREAKER
DISPOSITIF DE PROTECTION COMPRENANT UN COMMUTATEUR DE PUISSANCE, NOTAMMENT UN COMMUTATEUR DE PUISSANCE À BASSE TENSION

(30) Priorität: 23.01.2006 DE 102006004800
(43) Veröffentlichungstag der Anmeldung: 08.10.2008
(73) Patentinhaber: Siemens Aktiengesellschaft, 80333 München (DE)
(72) Erfinder: FRANKE, Henry, 13189 Berlin (DE); MIZENER, Jeffery C., 76039 Texas/Euless (US); REDMANN, Ilka, 14612 Falkensee (DE)
(86) Internationale Anmeldenummer: PCT/EP2006/070218
(87) Internationale Veröffentlichungsnummer: WO 2007/082631

(56) Entgegenhaltungen:
- EP-A2- 0 446 951
- COSSE R E ET AL: "THE PRACTICE OF GROUND DIFFERENTIAL RELAYING" IEEE TRANSACTIONS ON INDUSTRY APPLICATIONS, IEEE SERVICE CENTER, PISCATAWAY, NJ, US, Bd. 30, Nr. 6, 1. November 1994 (1994-11-01), Seiten 1472-1479, XP000504498 ISSN: 0093-9994
- K RAJAMANI: "Restricted Earth Protection Practices" IEEMA JOURNAL, Bd. 26, Nr. 1, 1. Januar 2006 (2006-01-01), Seiten 92-95, XP008077023 Bombay ISSN: 0970-2946

## Beschreibung

Die Erfindung betrifft eine Schutzeinrichtung mit einem Leistungsschalter, insbesondere einem Niederspannungs-Leistungsschalter, gemäß dem Oberbegriff des Anspruchs 1.

Es ist bekannt, Niederspannungs-Leistungsschalter mit Überstromauslösern zu versehen, die neben dem Schutz vor Überlast und Kurzschluss auch einen Schutz gegen Erdschluss beinhalten können. Die Bestimmung des Erdschlussstroms kann über die Bildung der Vektorsumme der Phasenströme erfolgen oder aber es wird der zur Einspeisung zurückfließende Erdschlussstrom mit einem Wandler gemessen. Dabei kann jedoch nur der durch den Leistungsschalter fließende Erdschlussstrom (unrestricted earth fault) bestimmt werden.

In Anlagenapplikationen kann es jedoch erforderlich sein, neben dem durch den Niederspannungs-Leistungsschalter fließenden Erdschlussstrom auch einen Erdfehler zwischen der Einspeisung (Mittelspannungs-Transformator) und dem Leistungsschalter zu bestimmen (restricted earth fault).

Beispiele von solchen Schutzeinrichtungen sind aus dem folgenden Stand der Technik bekannt:
COSSE R E ET AL: "THE PRACTICE OF GROUND DIFFERENTIAL RELAYING", IEEE TRANSACTIONS ON INDUSTRY APPLICATIONS, D1 IEEE SERVICE CENTER, PISCATAWAY, NJ, US, Bd. 30, Nr. 6, November 1994, Seiten 1472-1479.
K RAJAMANI: "Restricted Earth Protection Practices", D2 IEEMA JOURNAL, Bd. 26, Nr. 1, Januar 2006 - Seiten 92-95, Bombay
D3 EP 0 446 951 (MITSUBISHI ELECTRIC CORP [JP])

Aufgabe der Erfindung ist es, eine Schutzeinrichtung mit einem Leistungsschalter anzugeben, die auch den Erdschlussstrom zwischen Einspeisung (Transformator) und Leistungsschalter (restricted earth fault) ermitteln kann.

Die Lösung der Aufgabe ist durch die Merkmale des Anspruchs 1 gegeben; die Unteransprüche betreffen vorteilhafte Ausgestaltungen.

Die Lösung sieht vor, dass gleichzeitig zwischen der Sternschaltung des Transformators und der Überstromeinrichtung an jedem Phasenleiter, dem Nullleiter und einem am Sternpunkt angeschlossenen mit Erde verbundenen Sternpunktleiter jeweils zweite magneto-elektrische Wandler vorgesehen sind, dass anhand der Wandlerströme der zweiten Wandler jeweils das Vorliegen eines zweiten Erdschlussstroms ermittelt wird und dass bei Vorliegen eines zweiten Erdschlussstroms ein Signal zur Abschaltung des Transformators gebildet wird. Bei Erkennen eines Erdschlussstroms wird jetzt von der Überstromeinrichtung (vom "Überstromauslöser") eine Meldung in Form eines Signals generiert, die zur Abschaltung des Transformators bzw. der Einspeisung verwendet werden kann. Die Überwachung von Erdfehlern zwischen dem Transformator (der Einspeisung) und dem Leistungsschalter kann dabei als Nebeneffekt leicht in die Überstromeinrichtung des Leistungsschalters integriert werden.

Die Sicherheit der Schutzeinrichtung lässt sich verbessern, wenn bei Vorliegen eines ersten und/oder zweiten Erdschlussstroms dessen Wert jeweils ermittelt wird und wenn die Unterbrechung bei Vorliegen eines ersten Erdschlussstroms bzw. die Abschaltung bei Vorliegen eines zweiten Erdschlussstroms nur erfolgt, wenn dessen Wert jeweils einen vorgegebenen Grenzwert überschreitet.

Eine einfache Schutzeinrichtung sieht vor, dass die zweiten Wandler so zusammengeschaltet sind, dass ein Differenzstrom gebildet wird.

Technisch einfach ist es, wenn die zweiten Wandler Spulen als Sensorelemente aufweisen.

Bei einer einfachen Ausführung sind alle Spulen der zweiten Wandler parallel geschaltet.

Zweckmäßigerweise erfolgt die Ermittlung des Erdschlussstromes jeweils anhand des Differenzstroms oder anhand der Vektorsumme der Phasenströme der Phasenleiter.

Bei einer bedienfreundlichen Schutzeinrichtung wird das Signal zur Abschaltung des Transformators optisch angezeigt.

Steuerungstechnisch einfach ist es, wenn das Signal zur Abschaltung des Transformators über einen Bus ausgegeben wird, der wiederum mit einem Relaismodul verbunden ist, welches bei vorliegendem Signal zur Abschaltung des Transformators mittels seiner Relaiskontakte die Abschaltung des Transformators auslöst.

Eine kompakte Ausgestaltung sieht vor, dass die Phasenleiter und der Nullleiter durch den Leistungsschalter hindurch verlaufen und das Signal zur Abschaltung des Transformators an dem Leistungsschalter optisch angezeigt wird.

Bedienfreundlicher ist es, wenn bei und/oder nach Abschaltung des Transformators ein Rückmeldesignal generiert und optisch am Leistungsschalter angezeigt wird.

Die Erfindung wird nachfolgend anhand einer Zeichnung näher beschrieben. Die einzige Figur zeigt in einer schematischen Darstellung einen sekundärseitig in Sternschaltung betriebenen Transformator 1 (hier ein Mittelspannungs-Transformator), der über Phasenleiter L1, L2, L3 und einen Nullleiter N mit einem Verbraucher V verbünden ist.

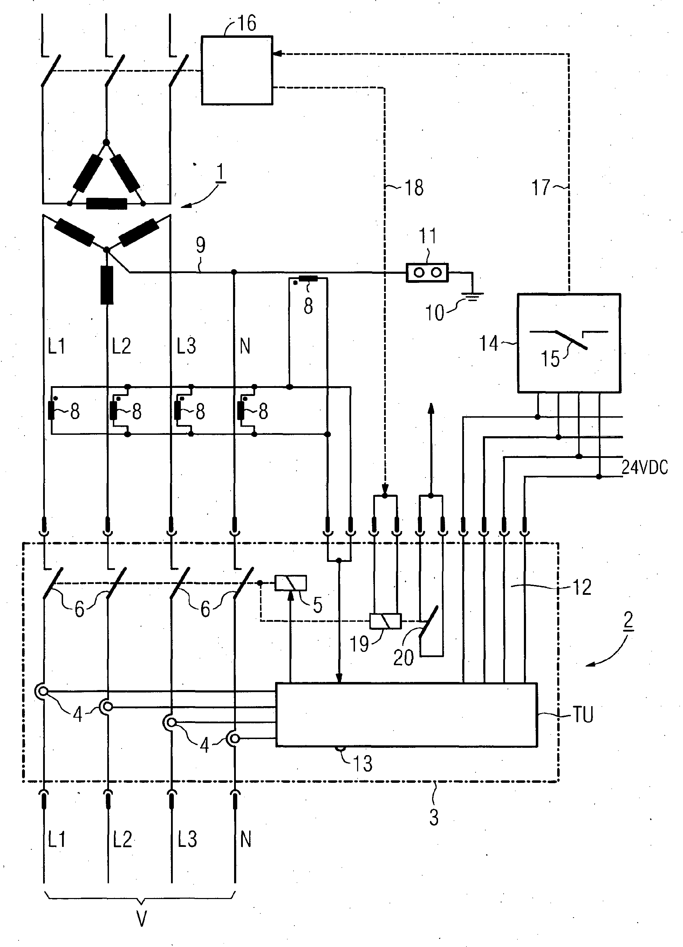

Weiter zeigt die Figur eine Schutzeinrichtung 2, die einen Leistungsschalter 3 umfasst. Die Phasenleiter L1, L2, L3 und der Nullleiter N sind durch den Leistungsschalter 3 hindurchgeführt. Der Leistungsschalter 3 weist eine Überstromschutzeinrichtung auf, deren magneto-elektrische Wandler 4 in der Figur 4 gezeigt sind. Bei den Wandlern 4 handelt es sich um Spulen, die den zugehörigen Leiter L1, L2, L3, N jeweils umfassen und als Sensorelemente für die durch die Leiter L1, L2, L3, N fließende Ströme dienen. Alle Wandler 4 sind elektrisch mit einer zentralen Prozessoreinheit TU (Trip Unit) verbunden, die einen softwaregesteuerten Prozessor aufweist (nicht gezeigt). Jeder Wandler 4 gibt einen entsprechenden Wandlerstrom an die Prozessoreinheit TU ab, die anhand der Wandlerströme das Vorliegen eines Erdschlussstroms bezogen auf die Figur unterhalb des Leistungsschalters 3 feststellt (erster Erdschlussstrom, unrestricted earth fault). Die Ermittlung des Erdschlussstroms erfolgt jeweils anhand des Differenzstromes (oder anhand der Vektorsumme) der über die Wandler 4 erfassten Phasenströme.

Weiter weist der Leistungsschalter eine Schalteinrichtung auf, dessen Auslösemagnet 5 in der Figur dargestellt ist. Der Auslösemagnet 5 betätigt bei Vorliegen eines Erdschlussstroms einen Schalter mit mehreren Schalterkontakten 6, um die Phasenleiter L1, L2, L3 zwischen dem Transformator 1 und dem Verbraucher V zu unterbrechen. Wie die Figur zeigt, wird dabei auch der Nullleiter N unterbrochen. Die Aktivierung des Auslösemagneten 5 erfolgt mittels eines von der Prozessoreinheit TU abgegebenen Auslösesignals, was hier schematisch als Pfeil 7 dargestellt ist.

Zur Schutzeinrichtung gehören weiter oberhalb des Leistungsschalters 3 in der Figur dargestellte weitere magneto-elektrische Wandler 8, welche analog zu den Wandlern 4 die zugehörigen Leiter L1, L2, L3, N sowie hier zusätzlich den Sternpunktleiter 9 umschließen, der mit dem Sternpunkt der Sternschaltung und mit Erde 10 verbunden ist, wobei das Element 11 in der Figur schematisch eine lösbare Verbindung mit der Erde 10 darstellt. Die Wandler 8 sind als Spulen ausgebildet, die alle parallel geschaltet sind. Die Zusammenschaltung ermöglicht es, einen entsprechenden Differenzstrom zu bilden und das Auftreten eines Erdschlussstroms anhand des Differenzstroms zu ermitteln. (Selbstverständlich könnte der Erdschlussstrom auch anhand der Vektorsumme der Phasenströme ermittelt werden.)

Die Figur zeigt, dass die zusammen geschalteten Wandler 8 mit der Prozessoreinheit TU verbunden sind. Zur Bewertung der Wandlerströme wird hier derselbe Algorithmus wie für die Wandlerströme der Wandler 4 eingesetzt.

Wird anhand der Wandlerströme der Wandler 8 das Vorliegen eines Erdschlussstroms (zweiter Erdschlussstrom, restricted earth fault)ermittelt, so generiert die Prozessoreinheit TU ein Signal zur Abschaltung des Transformators 1, das über einen Bus 12 ausgegeben wird. Gleichzeitig wird das Signal über eine optische Anzeige 13 am Leistungsschalter 3 angezeigt.

Der Bus 12 ist mit einem Modul 14 verbunden, welches bei ausgegebenem Signal zur Abschaltung des Transformators 1 mittels seiner Kontakte 15 die Abschaltung des Transformators 1 über die Schalteinheit 16 auslöst (Verbindungslinie 17), wobei es sich bei dem Modul 14 auch um ein Relaismodul mit seinen Relaiskontakten handeln kann. Die Einheit 16 generiert nach Abschaltung des Transformators 1 ein Rückmeldesignal, das an den Leistungsschalter 3 zurückgeführt wird (Verbindungslinie 18). Anhand dieses zurückgeführten Signals wird ein weiterer Auslösemagnet 19 geschaltet, der die Schalterkontakte 6 öffnet, und zwar unabhängig vom Auslösemagneten 5. Dabei wird ein Mikroschalter 20 geöffnet, so dass die Abschaltung des Transformators und die Stellung der Schalterkontakte 6 abfragbar ist. Dies kann auch optisch am Leistungsschalter 3 angezeigt werden.

Die Unterbrechung bzw. die Abschaltung bei Vorliegen eines Erdschlussstroms erfolgt nur, wenn dessen Wert jeweils einen vorgegebenen Grenzwert überschreitet.

Die Schutzfunktion für diesen Erdschlussstrom (restricted e-arth fault) lässt sich ebenfalls bezüglich der Ansprechwerte als auch der Verzögerungszeiten in der Überstromeinrichtung parametrieren, unter Verwendung der Schnittstellen des Leistungsschalters 3. Dies kann auch über den Bus 12 erfolgen, über den auch eine Ferndiagnose möglich ist.

## Patentansprüche

1. Schutzeinrichtung (2) mit einem Leistungsschalter (3), insbesondere einem Niederspannungs-Leistungsschalter, für eine elektrische Verbindung von einem Transformator (1), insbesondere einem Mittelspannungs-Transformator, zu einem Verbraucher (V), wobei der Transformator (1) sekundärseitig in Sternschaltung betrieben wird und die Verbindung über mindestens drei Phasenleiter (L1, L2, L3) und einen Nullleiter (N) erfolgt,
wobei zwischen dem Transformator (1) und dem Verbraucher (V) eine Überstromeinrichtung angeordnet ist, die an jedem Phasenleiter (L1, L2, L3) und dem Nullleiter (N) angeordnete erste magneto-elektrische Wandler aufweist (4), die jeweils einen Wandlerstrom abgeben, wobei die Überstromeinrichtung anhand der Wandlerströme das Vorliegen eines ersten Erdschlussstroms jeweils feststellt, und
wobei der Leistungsschalter (3) eine Schalteinrichtung aufweist, die bei Vorliegen eines ersten Erdschlussstroms zumindest die Phasenleiter (L1, L2, L3) zwischen dem Transformator (1) und dem Verbraucher (V) unterbricht, wobei gleichzeitig zwischen der Sternschaltung und der Überstromeinrichtung an jedem Phasenleiter (L1, L2, L3), dem (N) Nullleiter und einem am Sternpunkt angeschlossenen Sternpunktleiter (9) jeweils zweite magneto-elektrische Wandler (8) vorgesehen sind, wobei der Sternpunktleiter (9) mit Erde verbunden ist,
dass anhand der Wandlerströme der zweiten Wandler (8) jeweils das Vorliegen eines zweiten Erdschlussstroms ermittelt wird und
dass bei Vorliegen eines zweiten Erdschlussstroms ein Signal zur Abschaltung des Transformators (1) gebildet wird.

2. Schutzeinrichtung nach Anspruch 1,
**dadurch gekennzeichnet,**
**dass** bei Vorliegen eines ersten und/oder zweiten Erdschlussstroms dessen Wert jeweils ermittelt wird und dass die Unterbrechung bei Vorliegen eines ersten Erdschlussstroms bzw. die Abschaltung bei Vorliegen eines zweiten Erdschlussstroms nur erfolgt, wenn dessen Wert jeweils einen vorgegebenen Grenzwert überschreitet.

3. Schutzeinrichtung nach Anspruch 1 oder 2,
**dadurch gekennzeichnet,**
**dass** die zweiten Wandler (8) so zusammengeschaltet sind, dass ein Differenzstrom gebildet wird.

4. Schutzeinrichtung nach einem der Ansprüche 1 - 3,
**dadurch gekennzeichnet,**
**dass** die zweiten Wandler (8) Spulen als Sensorelemente aufweisen.

5. Schutzeinrichtung nach Anspruch 4,
**dadurch gekennzeichnet,**
**dass** alle Spulen der zweiten Wandler (8) parallel geschaltet sind.

6. Schutzeinrichtung nach einem der Ansprüche1 - 5,
**dadurch gekennzeichnet,**
**dass** die Ermittlung des Erdschlussstroms jeweils anhand des Differenzstroms oder anhand der Vektorsumme der Phasenströme erfolgt.

7. Schutzeinrichtung nach einem der Ansprüche 1 - 6,
**dadurch gekennzeichnet,**
**dass** das Signal zur Abschaltung des Transformators (1) optisch angezeigt wird.

8. Schutzeinrichtung nach einem der Ansprüche 1 - 7,
**dadurch gekennzeichnet,**
**dass** das Signal zur Abschaltung des Transformators (1) über einen Bus (12) ausgegeben wird, der wiederum mit einem Modul (14) verbunden ist, welches bei vorliegendem Signal zur Abschaltung des Transformators (1) mittels seiner Kontakte (15) die Abschaltung des Transformators (1) auslöst.

9. Schutzeinrichtung nach einem der Ansprüche 1 - 8,
**dadurch gekennzeichnet,**
**dass** das die Phasenleiter (L1, L2, L3) und der Nullleiter (N) durch den Leistungsschalter (3) hindurch verlaufen und das Signal zur Abschaltung des Transformators (1) an dem Leistungsschalter (3) optisch angezeigt wird.

10. Schutzeinrichtung nach Anspruch 9,
**dadurch gekennzeichnet,**
**dass** bei und/oder nach Abschaltung des Transformators (1) ein Rückmeldesignal (18) generiert und optisch am Leistungsschalter (3) angezeigt wird.

## Claims

1. Protective device (2) having a circuit breaker (3), in particular a low-voltage circuit breaker, for an electrical connection of a transformer (1), in particular a medium-voltage transformer, to a load (V), the transformer (1) being operated on the secondary side in star-connected fashion, and the connection taking place via at least three phase conductors (L1, L2, L3) and a neutral conductor (N),
an overcurrent device being arranged between the transformer (1) and the load (V) and having first magnetoelectric transducers (4) arranged on each phase conductor (L1, L2, L3) and the neutral conductor (N), which transducers (4) each emit a transducer current, the overcurrent device in each case establishing the presence of a first ground-fault current using the transducer currents, and
the circuit breaker (3) having a switching device, which interrupts at least the phase conductors (L1, L2, L3) between the transformer (1) and the load (V) in the event of the presence of a first ground-fault current,
wherein in each case second magnetoelectric transducers (8) are provided simultaneously between the star connection and the overcurrent device on each phase conductor (L1, L2, L3), the neutral conductor (N) and a star-point conductor (9) connected at the star point, the star-point conductor (9) being connected to ground,
in that in each case the presence of a second ground-fault current is determined using the transducer currents of the second transducers (8), and
in that in the event of the presence of a second ground-fault current, a signal for disconnecting the transformer (1) is formed.

2. Protective device according to Claim 1,
**characterized**
**in that**, in the event of the presence of a first and/or a second ground-fault current, the value of said ground-fault current is determined in each case, and in that the interruption in the event of the presence of a first ground-fault current or the disconnection in the event of the presence of a second ground-fault current only takes place if this value in each case exceeds a predetermined limit value.

3. Protective device according to Claim 1 or 2,
**characterized**
**in that** the second transducers (8) are connected to one another in such a way that a residual current is formed.

4. Protective device according to one of Claims 1 - 3,
**characterized**
**in that** the second transducers (8) have coils as the sensor elements.

5. Protective device according to Claim 4,
**characterized**
**in that** all of the coils of the second transducers (8) are connected in parallel.

6. Protective device according to one of Claims 1 - 5,
**characterized**
**in that** the determination of the ground-fault current in each case takes place using the residual current or using the phasor sum of the phase currents.

7. Protective device according to one of Claims 1 - 6,
**characterized**
**in that** the signal for disconnecting the transformer (1) is displayed optically.

8. Protective device according to one of Claims 1 - 7,
**characterized**
**in that** the signal for disconnecting the transformer (1) is output via a bus (12), which in turn is connected to a module (14), which triggers the disconnection of the transformer (1) by means of its contacts (15) when the signal for disconnecting the transformer (1) is present.

9. Protective device according to one of Claims 1 - 8,
**characterized**
**in that** the phase conductors (L1, L2, L3) and the neutral conductor (N) run through the circuit breaker (3), and the signal for disconnecting the transformer (1) is displayed optically on the circuit breaker (3).

10. Protective device according to Claim 9,
**characterized**
**in that**, during and/or after disconnection of the transformer (1), a feedback signal (18) is generated and is displayed optically on the circuit breaker (3).

## Revendications

1. Dispositif de protection (2) comprenant un disjoncteur (3), notamment un disjoncteur basse tension, pour une connexion électrique d'un transformateur (1), notamment d'un transformateur moyenne tension, à un utilisateur (V), le transformateur (1) étant couplé en étoile sur le côté secondaire et la connexion étant réalisée par le biais d'au moins trois conducteurs de phase (L1, L2, L3) et un fil neutre (N),
un dispositif contre les surintensités étant situé entre le transformateur (1) et l'utilisateur (V), lequel dispositif comprend des premiers convertisseurs magnéto-électriques (4) situés au niveau de chaque conducteur de phase (L1, L2, L3) et du fil neutre (N) qui délivrent à chaque fois un courant de convertisseur, le dispositif contre les surintensités déterminant à chaque fois la présence d'un premier courant de défaut à la terre à l'aide des courants de convertisseur,
le disjoncteur (3) comprenant un dispositif de commutation qui, en présence d'un premier courant de défaut à la terre, interrompt au moins les conducteurs de phase (L1, L2, L3) entre le transformateur (1) et l'utilisateur (V), des seconds convertisseurs magnéto-électriques (8) étant prévus, en même temps, entre le couplage en étoile et le dispositif contre les surintensités, respectivement au niveau de chaque conducteur de phase (L1, L2, L3), du fil neutre (N) et d'une ligne neutre (9) branchée sur le couplage en étoile, la ligne neutre (9) étant reliée à la terre,
la présence d'un second courant de défaut à la terre étant déterminée à chaque fois à l'aide des courants de convertisseur des seconds convertisseurs (8) et
un signal étant formé, en présence d'un second courant de défaut à la terre, pour mettre le transformateur (1) hors circuit.

2. Dispositif de protection selon la revendication 1, **caractérisé en ce qu'**en présence d'un premier et/ou second courant de défaut à la terre, sa valeur est à chaque fois déterminée et **en ce que** l'interruption en présence d'un premier courant de défaut à la terre ou la mise hors circuit en présence d'un second courant de défaut à la terre ne se produit que lorsque la valeur de ce courant dépasse à chaque fois une valeur limite prédéfinie.

3. Dispositif de protection selon la revendication 1 ou 2, **caractérisé en ce que** les seconds convertisseurs (8) sont interconnectés de façon qu'un courant différentiel résiduel soit généré.

4. Dispositif de protection selon l'une des revendications 1-3, **caractérisé en ce que** les seconds convertisseurs (8) comportent des bobines en tant qu'éléments de détection.

5. Dispositif de protection selon la revendication 4, **caractérisé en ce que** toutes les bobines des seconds convertisseurs (8) sont montées en parallèle.

6. Dispositif de protection selon l'une des revendications 1-5, **caractérisé en ce que** la détermination du courant de défaut à la terre s'effectue à chaque fois à l'aide du courant différentiel résiduel ou à l'aide de la somme vectorielle des courants de phase.

7. Dispositif de protection selon l'une des revendications 1-6, **caractérisé en ce que** le signal de mise hors circuit du transformateur (1) est affiché optiquement.

8. Dispositif de protection selon l'une des revendications 1-7, **caractérisé en ce que** le signal de mise hors circuit du transformateur (1) est délivré par le biais d'un bus (12) qui est relié à son tour à un module (14) qui, en présence du signal de mise hors circuit du transformateur (1), déclenche la mise hors circuit du transformateur (1) à l'aide de ses contacts (15).

9. Dispositif de protection selon l'une des revendications 1-8, **caractérisé en ce que** les conducteurs de phase (L1, L2, L3) et le fil neutre (N) traversent le disjoncteur (3) et le signal de mise hors circuit du transformateur (1) est affiché optiquement au niveau du disjoncteur (3).

10. Dispositif de protection selon la revendication 9, **caractérisé en ce que**, lors de la mise hors circuit du transformateur (1) et/ou après celle-ci, un signal en retour (18) est généré et affiché optiquement au niveau du disjoncteur (3).
